# EUROPÄISCHE PATENTSCHRIFT

(11) **EP 2 929 311 B1**
(45) Veröffentlichungstag und Bekanntmachung des Hinweises auf die Patenterteilung: **09.11.2016**
(21) Anmeldenummer: 14700994.8
(22) Anmeldetag: 15.01.2014
(51) Int. Cl.: G01K 1/10, G01K 7/02

(54) **THERMOELEMENT**
THERMOCOUPLE
THERMOCOUPLE

(30) Priorität: 24.01.2013 DE 102013201179
(43) Veröffentlichungstag der Anmeldung: 14.10.2015
(73) Patentinhaber: Dekema Dental-Keramiköfen GmbH, 83395 Freilassing (DE)
(72) Erfinder: MILLER, Stephan, 83278 Traunstein (DE)
(74) Vertreter: Manitz, Finsterwald & Partner GbR
(86) Internationale Anmeldenummer: PCT/EP2014/050692
(87) Internationale Veröffentlichungsnummer: WO 2014/114536

(56) Entgegenhaltungen:
- EP-A1- 0 857 956
- EP-A2- 0 045 535
- EP-A2- 0 252 692
- FR-A1- 2 590 980
- US-A- 2 483 350

## Beschreibung

Die vorliegende Erfindung betrifft ein Thermoelement zur Temperaturmessung.

Die Funktionsweise solcher Thermoelemente ist grundsätzlich bekannt. Vereinfacht ausgedrückt umfassen Thermoelemente zwei Leiter aus unterschiedlichen Materialen, die an einer Messspitze in elektrisch leitendem Kontakt miteinander stehen. An den der Messspitze abgewandten Enden der Leiter kann eine Spannung abgegriffen werden, die ein Maß für eine Temperaturdifferenz zwischen der Messspitze und einer Vergleichsmessstelle - diese ist meist in das Thermoelement integriert - ist. Die Wahl der verwendeten Leitermaterialen hängt unter anderem von dem Temperaturbereich ab, bei dem das jeweilige Thermoelement zum Einsatz gelangen soll.

Thermoelemente sind - wie viele andere Sensoren auch - Alterungsprozessen unterworfen, die Auswirkungen auf die Temperaturabhängigkeit der zur Temperaturbestimmung zu messenden Thermospannung haben. Solche Alterungsprozesse spielen insbesondere bei Thermoelementen eine Rolle, die bei hohen Temperaturen eingesetzt werden. Sie können dazu führen, dass die gemessene Temperatur von der tatsächlich vorliegenden Temperatur signifikant abweicht.

In vielen Bereichen ist eine alterungsbedingte Veränderung der Charakteristik eines Thermoelements sehr problematisch. Beispielsweise ist die exakte Einhaltung vordefinierter Temperaturprofile bei Brennprozessen von dentalen Produkten in entsprechenden Brennöfen von großer Bedeutung, um eine hohe Qualität des Brennguts sicherzustellen. Thermoelemente sind in der Regel in einen Schaft eingebettet, der die Leiter schützend umgibt. Bei Hochtemperaturthermoelementen wird als Schaftmaterial beispielsweise Aluminiumoxid verwendet. Häufig gelangt zusätzlich auch ein Hochtemperaturklebstoff zum Einsatz.

Bei hohen Temperaturen diffundieren Stoffe, die beispielsweise als Ionen vorliegen, durch das Schaftmaterial zu den Leitern und verändern deren Eigenschaften bzw. greifen sie an. Die Stoffe können aus der Umgebung des Thermoelements oder aus dem Schaftmaterial selbst stammen. Mit anderen Worten werden die Leiter beständig durch durch das Schaftmaterial diffundierende Stoffe angegriffen, weshalb sich ihre Eigenschaften zeitabhängig ändern. Dies führt wiederum zu einer schleichenden Verschlechterung der Messgenauigkeit des Thermoelements, d.h. das Thermoelement "driftet" bzw. altert. Außerdem wurde beobachtet, dass die vorstehend beschriebenen Alterungsprozesse sich auch nachteilig auf die Ansprechdynamik des Thermoelements auswirken können.

Die Druckschrift EP 0 857 956 A1 offenbart eine Temperaturprobe, wobei der Temperaturfühler in einem Schaft eingebaut ist, der im Bereich des eingetauchten Endes durch eine dünne metallische Membran verschlossen ist.

Es ist daher eine Aufgabe der vorliegenden Erfindung, ein Thermoelement zu schaffen, das weniger anfällig für Alterungsprozesse ist und das daher beständig zuverlässige Temperaturwerte liefert. Außerdem soll das Thermoelement Temperaturänderungen schnell erfassen können.

Diese Aufgabe wird durch ein Thermoelement mit den Merkmalen des Anspruchs 1 gelöst.

Das erfindungsgemäße Thermoelement umfasst einen Schaft und eine an einem Ende des Schafts angeordnete Messspitze. Ferner umfasst das Thermoelement einen ersten Leiter und einen zweiten Leiter, die aus unterschiedlichen Leitermaterialien gefertigt sind und die an einer im Bereich der Messspitze vorgesehenen Kontaktstelle in elektrischem Kontakt miteinander stehen, wobei der erste Leiter und der zweite Leiter zumindest abschnittsweise in das Material des Schafts eingebettet sind. Die Kontaktstelle ist zusätzlich oder alternativ zu dem Schaftmaterial zumindest abschnittsweise durch eine aus einem Abschirmmaterial gebildete Abschirmung gegenüber dem Außenraum abgeschirmt. Das Abschirmmaterial weist einen niedrigeren Diffusionskoeffizienten und/oder eine höhere Wärmeleitfähigkeit auf als das Schaftmaterial.

Die Kontakstelle und zumindest ein Teil der Abschirmung sind aus einer gemeinsamen Formmasse geformt, die aus Endabschnitten der beiden Leiter geformt ist.

Der Schaft kann aus einem einzigen Material gefertigt sein. Es ist aber auch durchaus möglich, den Schaft aus mehreren Materialien zu bilden. Beispielsweise kann eine rohrförmige Umhüllung vorgesehen sein, in die ein zweites Material eingeführt wird. Beispielsweise ist die Umhüllung ein Aluminiumoxid-Rohr, das zumindest teilweise mit einem Hochtemperaturklebstoff ausgefüllt wird.

Der Begriff "Einbetten" ist dahingehend zu verstehen, dass die beiden Leiter durch das Innere des Schafts geführt sind. Dies kann bedeuten, dass die beiden Leiter in getrennten Bohrungen verlaufen und erst im Bereich der Kontaktstelle zusammen geführt werden. Es ist aber auch möglich, die beiden Leiter - beispielsweise mit Hilfe eines Hochtemperaturklebstoffs - "einzugießen", so dass die beiden Leiter im Wesentlichen vollständig von dem Schaftmaterial umgeben sind.

Mit anderen Worten bilden die beiden Leiter die Grundkomponente des Thermoelements. Sie sind in der Kontaktstelle elektrisch leitend verbunden, damit sich bei einer Temperaturdifferenz zwischen der Kontaktstelle und einer Vergleichsmessstelle eine temperaturabhängige Spannung - eine sog. Thermospannung - ausbilden kann. Zum Schutz verlaufen die beiden Leiter zumindest abschnittsweise in dem Schaft. Um die für Alterungsprozesse besonders empfängliche Kontaktstelle zu schützen, ist diese zusätzlich durch eine Abschirmung gegenüber dem Außenraum geschützt. Die Abschirmung umfasst ein Material, das diffusionshemmend wirkt, d.h. das einen niedrigeren Diffusionskoeffizienten für zumindest einige der für die Alterungsprozesse verantwortlichen Stoffe aufweist als das Schaftmaterial. Zusätzlich oder alternativ kann die Abschirmung auch aus einem Material bestehen, das eine bessere Wärmeleitfähigkeit aufweist als das Schaftmaterial, um die Ansprechdynamik des Thermoelements zu verbessern und die Temperaturverteilung im Bereich der Messspitze zu homogenisieren. Vorzugsweise ist die Abschirmung sowohl diffusionshemmender als auch wärmeleitfähiger als das Schaftmaterial.

Weitere Ausführungsformen der Erfindung sind in der Beschreibung, den Ansprüchen und den Figuren angegeben.

Gemäß einer vorteilhaften Ausführungsform steht die Kontaktstelle nicht in Kontakt mit dem Schaftmaterial. Mit anderen Worten ist die Kontaktstelle außerhalb des Schaftmaterials angeordnet. Aus dem bzw. durch das Material des Schafts diffundierende und insbesondere aus dem Material des Schafts stammende Stoffe gelangen somit nicht direkt an die besonders korrosionsempfindliche Kontaktstelle.

Insbesondere ist die Kontaktstelle in einer Ausnehmung des Schafts angeordnet. Die Ausnehmung ist zum Beispiel eine Kammer, deren Seitenwände zumindest teilweise durch das Schaftmaterial gebildet sind.

Gemäß einer Ausführungsform ist die Ausnehmung ein Schlitz, der insbesondere parallel oder quer zu einer Längsachse des Schafts verläuft. Die Ausnehmung kann auch eine Bohrung sein, die insbesondere koaxial oder quer zu der Längsachse des Schafts angeordnet ist.

Es kann vorgesehen sein, dass die Abschirmung einen Deckel oder eine Kappe bildet, die die Ausnehmung gegenüber dem Außenraum abschließt. Die Abschirmung kann auch bandartig ausgeführt sein. Der Innenraum der Ausnehmung, in dem die Kontaktstelle angeordnet ist, steht bei dieser Ausführungsform nicht in Kontakt mit dem Außenraum. Der Innenraum kann jedoch mit Gas gefüllt, um eine konvektive Wärmeleitung zu ermöglichen.

Eine besonders effiziente Abschirmwirkung wird erreicht, wenn die Abschirmung die Außenseite der Messspitze im Wesentlichen vollständig umgibt oder abdeckt. Zusätzlich oder alternativ ist es möglich, dass die Kontaktstelle mit der Abschirmung in elektrisch leitendem Kontakt steht.

Es kann vorgesehen sein, dass die Kontaktstelle mit der Abschirmung in thermisch leitendem Kontakt steht, um die Ansprechdynamik des Thermoelements durch eine verbesserte Wärmeleitung zu erhöhen.

Gemäß einer Ausführungsform ist das Abschirmmaterial metallisch. Das Abschirmmaterial kann beispielsweise eines der beiden Leitermaterialien oder eine Mischung der beiden Leitermaterialien umfassen. Insbesondere umfasst eines der Leitermaterialien und/oder das Abschirmmaterial Platin.

Das Schaftmaterial kann Aluminiumoxid und/oder einen Hochtemperaturklebstoff umfassen.

Die Erfindung betrifft ferner ein Verfahren zur Herstellung eines Thermoelements, das eine verbesserte Alterungsbeständigkeit und Ansprechdynamik aufweist. Insbesondere handelt es sich dabei um ein Thermoelement gemäß einer der vorstehend beschriebenen Ausführungsformen. Das Thermoelement umfasst einen Schaft und eine an einem Ende des Schafts angeordnete Messspitze, wobei das Thermoelement einen ersten Leiter und einen zweiten Leiter umfasst, die aus unterschiedlichen Leitermaterialien gefertigt sind und die an einer im Bereich der Messspitze vorgesehenen Kontaktstelle in elektrischem Kontakt miteinander stehen. Der erste Leiter und der zweite Leiter sind zumindest abschnittsweise in das Material des Schafts eingebettet, wobei die Kontaktstelle zusätzlich oder alternativ zu dem Schaftmaterial zumindest abschnittsweise durch eine aus einem Abschirmmaterial gebildete Abschirmung gegenüber dem Außenraum abgeschirmt ist. Das Abschirmmaterial weist eine niedrigeren Diffusionskoeffizienten und/oder eine höhere Wärmeleitfähigkeit auf als das Schaftmaterial.

Erfindungsgemäß werden zur Herstellung der Kontaktstelle aus Endabschnitten der beiden Leiter eine gemeinsame Formmasse gebildet - beispielsweise durch mechanisches Umformen -, die die Kontaktstelle umfasst und aus der wiederum zumindest ein Teil der Abschirmung geformt wird. Bevorzugt werden die beiden Leiter - bzw. deren Endabschnitte - zur Herstellung der Kontaktstelle unter Bildung einer Schmelzperle gemeinsam zumindest teilweise aufgeschmolzen. Aus der erzeugten Schmelzperle wird dann zumindest ein Teil der Abschirmung geformt. Grundsätzlich ist es auch möglich, die Leiter zunächst separat endseitig aufzuschmelzen und dann die dadurch erzeugten Schmelzperlen zusammenzuführen, um eine gemeinsame Schmelzperle zu bilden.

Nachfolgend wird die vorliegende Erfindung rein beispielhaft anhand vorteilhafter Ausführungsformen unter Bezugnahme auf die beigefügten Zeichnungen erläutert. Es zeigen:

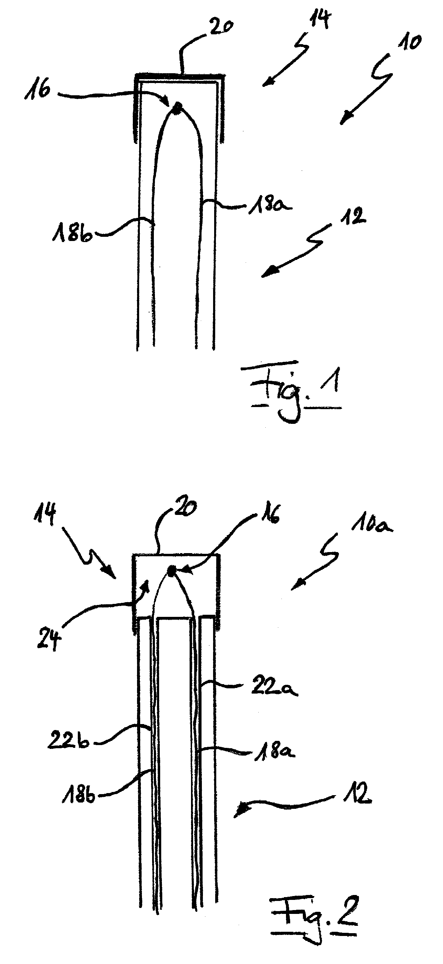

- Fig. 1 bis 8: verschiedene Ausführungsformen des erfindungsgemäßen Thermoelements.

Fig. 1 zeigt ein Thermoelement 10 mit einem Schaft 12 und mit einer Messspitze 14, die am freien Ende des Thermoelements 10 angeordnet ist und die eine Kontaktstelle 16 umfasst, durch die ein Kontakt zwischen zwei elektrischen Leitern 18a, 18b gebildet wird. Die Leiter 18a, 18b bestehen aus unterschiedlichen metallischen Materialien, so dass sich eine Thermospannung aufbauen kann, die ein Maß für die im Bereich der Messspitze 14 herrschende Temperatur ist. Verbreitete Materialpaarungen sind Nickel-Chrom/Nickel, Eisen-Kupfer/Nickel und Platin-Rhodium/Platin. Letztere Materialpaarung eignet sich insbesondere für hohe Temperaturbereiche. Bei besonders hohen Temperaturen werden auch Iridium-Iridium/Rhodium und Wolfram-5%-Rhenium/Wolfram25%-Rhenium Leiterpaarungen eingesetzt. Für die Messung sehr tiefer Temperaturen werden u.a. auch Gold/Eisen-Nickel/Chrom- oder Gold/Eisen-Gold/Silber-Materialpaarungen verwendet.

Bei dem bereits eingangs kurz erläuterten Alterungsprozess diffundierten Stoffe zu den Leitern 18a, 18b, die aus dem Schaft 12 selbst oder aus dem Außenraum stammen. Um die aus dem Außenraum stammenden Stoffe davon abzuhalten, insbesondere an die für die Temperaturmessung entscheidende Kontaktstelle 16 zu gelangen, ist eine Abschirmkappe 20 vorgesehen, die den Bereich um die Messspitze 14 großflächig abdeckt. Zwar können so grundsätzlich noch aus dem Schaft 12 stammende Stoffe zu der Kontaktstelle 16 gelangen, aus dem Außenraum stammende Stoffe haben allerdings einen wesentlich weiteren Weg zurückzulegen, um zur Kontaktspitze 16 zu gelangen als ohne die Kappe 20, was den Alterungsprozess des Thermoelements 10 stark verzögert.

Die Abschirmkappe 20 ist beispielsweise aus Platin, da sich dieses Material durch eine hohe Temperaturbeständigkeit und eine hohe Korrosionsfestigkeit auszeichnet. Außerdem weist es einen geringeren Diffusionskoeffizienten bezüglich der die Alterungsprozesse auslösenden Stoffe auf als das Schaftmaterial, das zum Beispiel Aluminiumoxid und/oder Hochtemperaturklebstoffe umfasst. Zudem weist es eine bessere Temperaturleitfähigkeit auf, so dass die in dem Messbereich herrschende Temperatur schnell und gleichmäßig durch die Abschirmkappe 20 dringen kann.

Die Abschirmkappe 20 kann direkt auf die Messspitze 14 aufgebracht werden oder zunächst separat gefertigt und dann an der Messspitze 14 befestigt werden. Sie beschränkt sich in der in Fig. 1 gezeigten Ausführungsform aus Materialersparnisgründen auf den Bereich der Messspitze 14 um die Kontaktstelle 16. Trotz dieser räumlichen Beschränkung wird durch die Abschirmkappe 20 eine gute Abschirmwirkung erzielt.

Fig. 2 zeigt ein Thermoelement 10a, bei dem die Leiter 18a, 18b durch separate Bohrungen 22a bzw. 22b durch den Schaft 12 geführt sind. Die Leiter 18a, 18b verlassen im Bereich der Messspitze 14 das Material des Schafts 12. Die Kontaktstelle 16 liegt somit außerhalb des Schafts 12.

Um die Kontaktstelle 16 mechanisch und/oder vor im Außenraum vorhandene Stoffen zu schützen, ist die Abschirmkappe 20 vorgesehen, die an dem Schaft 12 befestigt ist. Mit anderen Worten schafft die Abschirmkappe 20 einen geschützten Innenraum 24 in dem die Kontaktstelle 16 angeordnet ist. Um auch eine konvektive Wärmeleitung zu ermöglichen, ist der Innenraum 24 mit Gas gefüllt. Der Innenraum 24 kann beispielsweise mit Luft gefüllt sein. Es ist jedoch auch möglich, bestimmte Gase bzw. Gasgemische (z.B. Schutzgas bzw. Schutzgasgemische) in den Innenraum 24 einzubringen, die an die jeweils vorliegenden Bedingungen angepasst sind. Diese Maßnahme ist grundsätzlich bei allen Ausführungsformen des erfindungsgemäßen Thermoelements möglich, die einen vom Außenraum abgetrennten Innenraum aufweisen, in dem die Kontaktstelle 16 angeordnet ist.

Abweichend von der dargestellten topfförmigen Gestaltung der Abschirmkappe 20 kann diese auch beispielsweise glockenförmig sein oder einen parabelförmigen Querschnitt aufweisen. Die Formgebung der Abschirmkappe 20 kann frei an die jeweils vorliegenden Bedingungen angepasst werden.

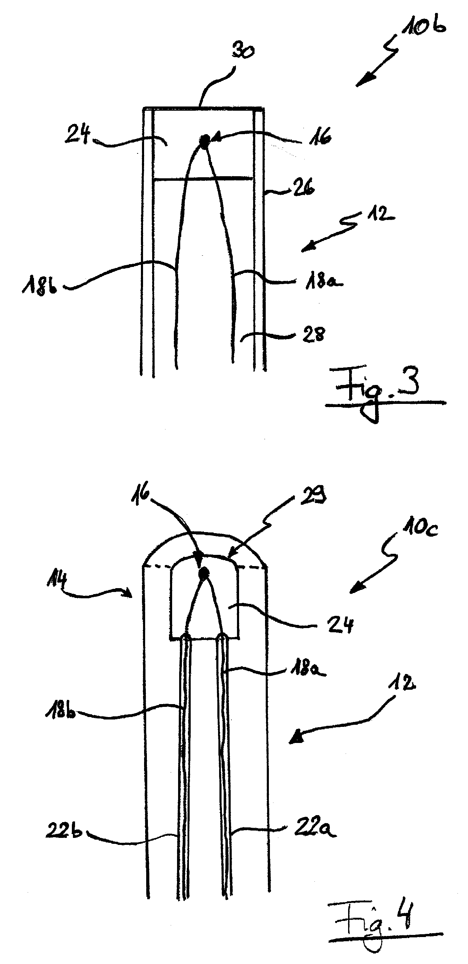

Fig. 3 zeigt ein Thermoelement 10b, dessen Schaft 12 ein Rohr - z.B. aus Aluminiumoxid gefertigt - umfasst, in das die beiden Leiter 18a, 18b mittels eines Hochtemperaturklebstoffs 28 getrennt voneinander eingebettet sind. Die Kontaktstelle 16 liegt frei in dem Innenraum 24, d.h. außerhalb des Hochtemperaturklebstoffs 28. Um die Kontaktstelle 16 zu schützen, ist das Rohr 26 nicht vollständig mit dem Hochtemperaturkleber 28 ausgefüllt, so dass das freie Ende des Rohrs 26 etwas weiter in den Außenraum ragt als die Kontaktstelle 16. Als zusätzliche Schutzmaßnahme ist ein Deckel 30 vorgesehen, der den durch das freie Ende des Rohrs 26 definierten Innenraum 24 abschließt. Insbesondere besteht der Deckel 30 aus dem Material eines der beiden Leiter 18a, 18b, beispielsweise aus Platin. Der Deckel 30 kann aber auch aus einem elektrisch nicht leitenden Material gefertigt sein, etwa aus Saphirglas.

Fig. 4 zeigt eine perspektivische Schnittansicht eines Thermoelements 10c, dessen Schaft 12 aus einem Stück geformt ist. Die Leitungen 18a, 18b verlaufen - wie bei dem Thermoelement 10a - durch Bohrungen 22a, 22b. Der die Kontaktstelle 16 schützende Innenraum 24 wird durch eine Bohrung 29 gebildet, die koaxial in das freie Ende des Schafts 12 eingebracht wurde. Es ist zu erkennen, dass die Kontaktstelle 16 in etwa in Höhe des die Bohrung 29 begrenzenden Randes liegt. Bringt man einen Deckel auf, wie er beispielsweise in Zusammenhang mit dem Thermoelement 10b der Fig. 3 beschrieben wurde, so kommt dieser in Kontakt mit der Kontaktstelle 16, wodurch die Wärmeleitung zwischen dem Außenraum und der Kontaktstelle 16 und damit die Ansprechdynamik des Thermoelements 10c verbessert werden.

Grundsätzlich kann es vorgesehen sein, dass die Kontaktstelle 16 nicht mechanisch an dem Deckel 30 befestigt ist. In vielen Anwendungsbereichen ist es jedoch vorteilhaft, wenn die Kontaktstelle 16 fest mit dem Deckel 30 verbunden, beispielsweise verschweißt ist. Dabei kann beispielsweise ein Punktschweißprozess zum Einsatz gelangen. Es ist jedoch auch möglich, die beiden Leiter 18a, 18b zur Bildung der Kontaktstelle 16 miteinander zu verschweißen. Zu diesem Zweck werden Endabschnitte der beiden Leiter 18a, 18b gemeinsam aufgeschmolzen - beispielsweise durch eine Flamme oder einen Laserstrahl -, so dass eine Schmelzperle erzeugt wird, die wiederum zur Herstellung des Deckels 30 genutzt wird. D. h. die Schmelzperle wird zum Abschließen des Innenraums 24 verformt, beispielsweise "platt" gedrückt. Aus der Schmelzperle kann die gesamte Abschirmung oder nur ein Teil davon gebildet werden.

Es versteht sich, dass die Kontaktierung der Kontaktstelle 16 mit dem Deckel 30 in analoger Form auf das auf einer Abschirmkappe 20 basierende Abschirmkonzept übertragen werden kann. Insbesondere die Nutzung der Schmelzperle zur Bildung der Abschirmung - wie auch immer diese konkret ausgestaltet sein mag - vereinfacht den Herstellungsprozess des erfindungsgemäßen Thermoelements.

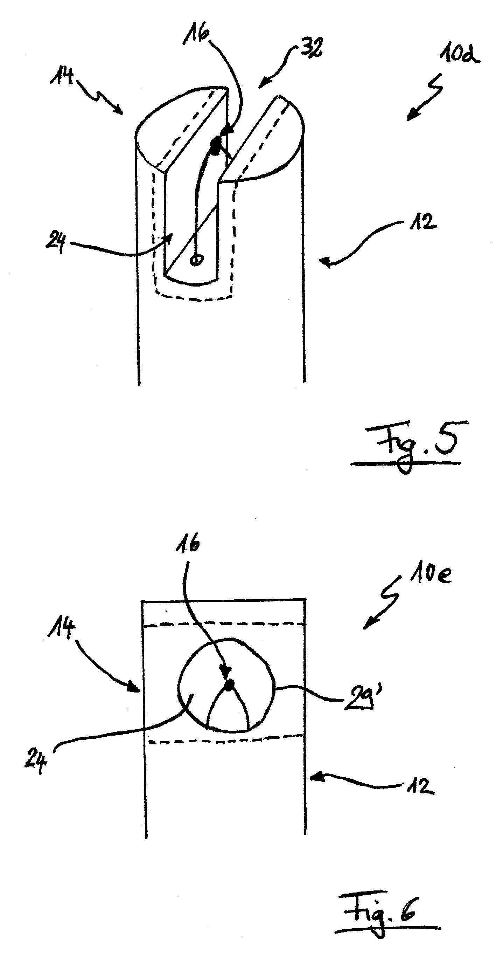

Fig. 5 zeigt ein Thermoelement 10d, das anstelle der in Fig. 4 gezeigten koaxialen Bohrung 29 zur Bildung des Innenraums 24 einen parallel zur Längsachse des Schafts 12 ausgerichteten Schlitz 32 aufweist, der in das freie Ende des Schafts 12 geschnitten oder gefräst wurde. Der Schlitz 32 ist so dimensioniert, dass er die Kontaktstelle 16 aufnehmen kann. D.h. er kann auch weniger tief sein, als beispielhaft in Fig. 5 gezeigt. Analoges gilt für die Ausgestaltung des jeweiligen Innenraums 24 der Thermoelemente 10a, 10b, 10c und der nachfolgend noch beschriebenen Thermoelemente 10e, 10f, 10g.

Die Messspitze 14 des Thermoelements 10d kann mit einer Abschirmkappe 20 versehen sein, wie sie beispielsweise anhand der Thermoelemente 10, 10a beschrieben wurde. Es ist jedoch auch möglich, den Innenraum 24 lediglich durch ein Streifen - gestrichelt angedeutet - gegenüber dem Außenraum abzuschließen, um das für die Abschirmung erforderliche Material zu sparen.

Grundsätzlich ist es auch möglich, anstelle der koaxialen Bohrung 29 des Thermoelements 10c der Fig. 4 eine im Wesentlichen senkrecht zur Längsachse des Schafts 12 angeordnete Bohrung 29' vorzusehen, in der die Kontaktstelle 16 angeordnet ist, wie anhand des Thermoelements 10e der Fig. 6 verdeutlicht wird. Der durch die Bohrung 29' gebildete Innenraum 24 lässt sich beispielsweise durch eine Abschirmkappe, ein im Bereich der Bohrung 29' zumindest teilweise um den Schaft 12 herum verlaufendes Band (gestrichelt angedeutet) oder zwei separate Abdeckungen gegenüber dem Außenraum verschließen.

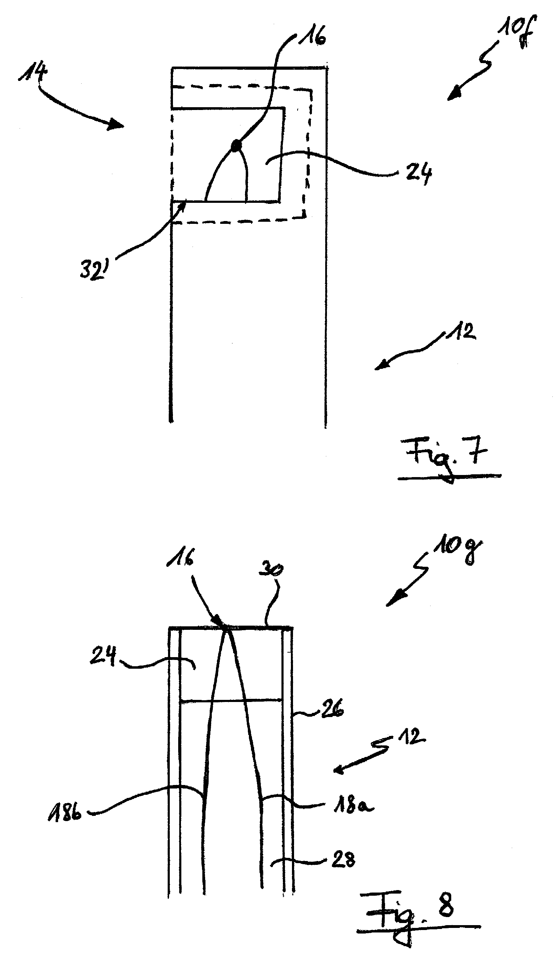

Fig. 7 zeigt ein Thermoelement 10f, das anstelle des in Fig. 5 gezeigten Schlitzes 32 einen quer zur Längsachse des Schafts 12 ausgerichteten Schlitz 32' aufweist. Der durch den Schlitz 32' gebildete Innenraum 24 lässt sich beispielsweise durch eine Abschirmkappe oder ein im Bereich des Schlitzes 32' zumindest teilweise um den Schaft 12 herum verlaufendes Band (gestrichelt angedeutet) gegenüber dem Außenraum verschließen.

Fig. 8 zeigt ein Thermoelement 10g, dessen Schaft 12 - wie bei dem in Fig. 3 gezeigten Thermoelement 10b - ein Rohr umfasst, in das die beiden Leiter 18a, 18b mittels eines Hochtemperaturklebstoffs 28 getrennt voneinander eingebettet sind. Im Gegensatz zur Situation bei dem Thermoelement 10b liegt die Kontaktstelle 16 jedoch nicht frei in dem Innenraum 24, sondern ist in den Deckel 30 integriert. Grundsätzlich kann dies erreicht werden, indem eine vorher erzeugte Kontaktstelle mechanisch oder thermisch mit dem Deckel verbunden wird. Bei dem in Fig. 8 gezeigten Thermoelement 10g wurden dahingegen die freien Enden der Leiter 18a, 18b zusammengeführt und gemeinsam aufgeschmolzen. Die dadurch erzeugte Schmelzperle wurde anschließend zu dem Deckel 30 umgeformt. Diese Vorgehensweise wurde bereits in Zusammenhang mit dem Thermoelement 10c erläutert. Grundsätzlich ist es auch möglich, die jeweiligen Enden der Leiter 18a, 18b separat voneinander aufzuschmelzen und die beiden entstandenen Schmelzperlen zusammenzuführen, um eine gemeinsame Schmelzperle zu bilden, die dann in geeigneter Weise umgeformt wird.

Zwar weisen die vorstehend beschriebenen Ausführungsformen 10, 10a, 10b, 10c, 10d 10e, 10f, 10g des erfindungsgemäßen Thermoelements zum Teil unterschiedliche Ausgestaltungen des Schafts 12 auf. Es versteht sich jedoch, dass sich die verschiedenen Ausgestaltungen der verbesserten Abschirmung im Bereich der Kontaktstelle im Grunde beliebig mit verschiedenen Schaftbauweisen kombinieren lassen. Der Schaft kann bedarfsgerecht geformt sein, d.h. er kann beispielsweise gekrümmte und/oder geknickte Abschnitte aufweisen, um der jeweils vorliegenden Bauraumsituation Rechnung zu tragen.

### Bezugszeichenliste

- 10, 10a, 10b, 10c, 10d, 10e, 10f, 10g: Thermoelement
- 12: Schaft
- 14: Messspitze
- 16: Kontaktstelle
- 18a, 18b: Leiter
- 20: Abschirmkappe
- 22a, 22b: Bohrung
- 24: Innenraum
- 26: Rohr
- 28: Hochtemperaturklebstoff
- 30: Deckel
- 29,29': Bohrung
- 32, 32': Schlitz

## Patentansprüche

1. Thermoelement mit einem Schaft (12) und mit einer an einem Ende des Schafts (12) angeordneten Messspitze (14), wobei das Thermoelement einen ersten Leiter (18a) und einen zweiten Leiter (18b) umfasst, die aus unterschiedlichen Leitermaterialien gefertigt sind und die an einer im Bereich der Messspitze (14) vorgesehenen Kontaktstelle (16) in elektrischem Kontakt miteinander stehen, wobei der erste Leiter (18a) und der zweite Leiter (18b) zumindest abschnittsweise in ein Material des Schafts (12) eingebettet sind und wobei die Kontaktstelle (16) zusätzlich oder alternativ zu dem Schaftmaterial zumindest abschnittsweise durch eine aus einem Abschirmmaterial gebildete Abschirmung (20, 30) gegenüber dem Außenraum abschirmt ist und wobei das Abschirmmaterial einen niedrigeren Diffusionskoeffizienten und/oder eine höhere Wärmeleitfähigkeit aufweist als das Schaftmaterial, **dadurch gekennzeichnet, dass** die Kontaktstelle (16) und zumindest ein Teil der Abschirmung (20, 30) aus einer gemeinsamen Formmasse geformt sind, die aus Endabschnitten der beiden Leiter (18a, 18b) geformt ist.

2. Thermoelement nach Anspruch 1,
**dadurchgekennzeichnet,** dass
die Kontaktstelle (16) nicht in Kontakt mit dem Schaftmaterial steht.

3. Thermoelement nach Anspruch 2,
**dadurchgekennzeichnet,** dass
die Kontaktstelle (16) in einer Ausnehmung (24, 29, 29', 32, 32') des Schafts (12) angeordnet ist.

4. Thermoelement nach Anspruch 3,
**dadurchgekennzeichnet,** dass
die Ausnehmung ein Schlitz (32, 32') ist, der insbesondere parallel oder quer zu einer Längsachse des Schafts (12) verläuft, oder dass die Ausnehmung eine Bohrung (29, 29') ist, die insbesondere koaxial oder senkrecht zur Längsachse des Schaft (12) angeordnet ist.

5. Thermoelement nach Anspruch 3 oder 4,
**dadurchgekennzeichnet,** dass
die Abschirmung einen Deckel (30) oder eine Kappe (20) bildet, der bzw. die die Ausnehmung (24, 29, 29', 32, 32') gegenüber dem Außenraum abschließt.

6. Thermoelement nach zumindest einem der vorstehenden Ansprüche,
**dadurchgekennzeichnet,** dass
die Abschirmung (20, 30) die Außenseiten der Messspitze (14) im Wesentlichen vollständig umgibt oder abdeckt.

7. Thermoelement nach zumindest einem der vorstehenden Ansprüche,
**dadurchgekennzeichnet,** dass
die Kontaktstelle (16) mit der Abschirmung (20, 30) in thermisch und/oder elektrisch leitendem Kontakt steht.

8. Thermoelement nach zumindest einem der vorstehenden Ansprüche,
**dadurchgekennzeichnet,** dass
das Abschirmmaterial metallisch ist.

9. Thermoelement nach zumindest einem der vorstehenden Ansprüche,
**dadurchgekennzeichnet,** dass
das Abschirmmaterial eine der beiden Leitermaterialien oder einer Mischung der beiden Leitermaterialien umfasst.

10. Thermoelement nach zumindest einem der vorstehenden Ansprüche,
**dadurchgekennzeichnet,** dass
zumindest eines der Leitermaterialien und/oder das Abschirmmaterial Platin umfasst.

11. Thermoelement nach zumindest einem der vorstehenden Ansprüche,
**dadurchgekennzeichnet,** dass
das Schaftmaterial Aluminiumoxid und/oder einen Hochtemperaturklebstoff umfasst.

12. Verfahren zur Herstellung eines Thermoelements, insbesondere nach einem der vorstehenden Ansprüche, mit einem Schaft (12) und mit einer an einem Ende des Schafts (12) angeordneten Messspitze (14), wobei das Thermoelement einen ersten Leiter (18a) und einen zweiten Leiter (18b) umfasst, die aus unterschiedlichen Leitermaterialien gefertigt sind und die an einer im Bereich der Messspitze (14) vorgesehenen Kontaktstelle (16) in elektrischem Kontakt miteinander stehen, wobei der erste Leiter (18a) und der zweite Leiter (18b) zumindest abschnittsweise in das Material des Schafts (12) eingebettet sind und die Kontaktstelle (16) zusätzlich oder alternativ zu dem Schaftmaterial zumindest abschnittsweise durch eine aus einem Abschirmmaterial gebildete Abschirmung (20, 30) gegenüber dem Außenraum abschirmt ist, wobei das Abschirmmaterial einen niedrigeren Diffusionskoeffizienten und/oder eine höhere Wärmeleitfähigkeit aufweist als das Schaftmaterial, **dadurch gekennzeichnet, dass** zur Herstellung der Kontaktstelle (16) aus Endabschnitten der beiden Leiter (18a, 18b) eine gemeinsame Formmasse geformt wird, aus der zumindest ein Teil der Abschirmung (20, 30) geformt wird.

13. Verfahren nach Anspruch 12,
**dadurchgekennzeichnet,** dass
die beiden Leiter (18a, 18b) zur Herstellung der Kontaktstelle (16) unter Bildung einer Schmelzperle - insbesondere gemeinsam - zumindest teilweise aufgeschmolzen werden und aus der Schmelzperle zumindest ein Teil der Abschirmung (20, 30) geformt wird.

## Claims

1. A thermal element having a shaft (12) and having a measurement probe (14) arranged at an end of the shaft (12), wherein the thermal element comprises a first conductor (18a) and a second conductor (18b) that are manufactured from different conductor materials and that are in electric contact with one another at a contact point (16) provided in a region of the measurement probe (14), wherein the first conductor (18a) and the second conductor (18b) are at least regionally embedded into a material of the shaft (12) and wherein the contact point (16) is screened at least regionally by a screen (20, 30) formed from a screen material in addition to or as an alternative of the shaft material with respect to an outer space and wherein the screen material has a lower coefficient of diffusion and /or a higher thermal conductivity than the shaft material,
**characterized in that**
the contact point (16) and at least one part of the screen (20, 30) are formed from a common molding compound which is formed from end sections of the two conductors (18a, 18b).

2. A thermal element in accordance with claim 1,
**characterized in that**
the contact point (16) is not in contact with the shaft material.

3. A thermal element in accordance with claim 2,
**characterized in that**
the contact point (16) is arranged in a recess (24, 29, 29', 32, 32') of the shaft (12).

4. A thermal element in accordance with claim 3,
**characterized in that**
the recess is a slot (32, 32') which in particular extends in parallel with or transverse to a longitudinal axis of the shaft (12); or **in that** the recess is a bore (29, 29') which is in particular arranged coaxial with or perpendicular to the longitudinal axis of the shaft (12).

5. A thermal element in accordance with claim 3 or claim 4,
**characterized in that**
the screen forms a cover (30) or a cap (20) that terminates the recess (24, 29, 29', 32, 32') with respect to the outer space.

6. A thermal element in accordance with at least one of the preceding claims, **characterized in that**
the screen (20, 30) substantially completely surrounds or covers the outer sides of the measurement probe (14).

7. A thermal element in accordance with at least one of the preceding claims, **characterized in that**
the contact point (16) is in thermally conductive and/or electrically conductive contact with the screen (20, 30).

8. A thermal element in accordance with at least one of the preceding claims, **characterized in that**
the screen material is metallic.

9. A thermal element in accordance with at least one of the preceding claims, **characterized in that**
the screen material comprises one of the two conductor materials or a mixture of both of the conductor materials.

10. A thermal element in accordance with at least one of the preceding claims, **characterized in that**
at least one of the conductor materials and/or the screen material comprises/comprise platinum.

11. A thermal element in accordance with at least one of the preceding claims, **characterized in that**
the shaft material comprises aluminum oxide and/or a high temperature adhesive.

12. A method of manufacturing a thermal element, in particular in accordance with any one of the preceding claims, having a shaft (12) and having a measurement probe (14) arranged at an end of the shaft (12), wherein the thermal element comprises a first conductor (18a) and a second conductor (18b) that are manufactured from different conductor materials and that are in electric contact with one another at a contact point (16) provided in a region of the measurement probe (14), wherein the first conductor (18a) and the second conductor (18b) are at least regionally embedded into the material of the shaft (12) and wherein the contact point (16) is screened at least regionally by a screen (20, 30) formed from a screen material in addition to or as an alternative of the shaft material with respect to the outer space, wherein the screen material has a lower coefficient of diffusion and /or a higher thermal conductivity than the shaft material,
**characterized in that**,
for the manufacture of the contact point (16), a common molding compound is formed from end sections of the two conductors (18a, 18b) from which at least a part of the screen (20, 30) is formed.

13. A method in accordance with claim 12,
**characterized in that**
the two conductors (18a, 18b) are melted at least partly - in particular together - for the manufacture of the contact point (16) while forming a melt bead and **in that** at least a part of the screen (20, 30) is formed from the melt bead.

## Revendications

1. Thermocouple comportant une tige (12) et une pointe de mesure (14) agencée à une extrémité de la tige (12), le thermocouple comprenant un premier conducteur (18a) et un second conducteur (18b) qui sont fabriqués en différents matériaux conducteurs et qui sont en contact électrique l'un avec l'autre à un emplacement de contact (16) prévu dans la zone de la pointe de mesure (14),
dans lequel le premier conducteur (18a) et le second conducteur (18b) sont noyés au moins localement dans un matériau de la tige (12) et en supplément ou en variante par rapport au matériau de tige, l'emplacement de contact (16) est blindé vis-à-vis de l'extérieur au moins localement par un blindage (20, 30) réalisé en un matériau de blindage, et le matériau de blindage présente un coefficient de diffusion plus faible et/ou une conductivité thermique plus élevée que le matériau de la tige,
**caractérisé en ce que**
l'emplacement de contact (16) et une partie au moins du blindage (20, 30) sont formés en une matière moulable commune qui est formée par des portions d'extrémité des deux conducteurs (18a, 18b).

2. Thermocouple selon la revendication 1,
**caractérisé en ce que**
l'emplacement de contact (16) n'est pas en contact avec le matériau de la tige.

3. Thermocouple selon la revendication 2,
**caractérisé en ce que**
l'emplacement de contact (16) est agencé dans un évidement (24, 29, 29', 32, 32') de la tige (12).

4. Thermocouple selon la revendication 3,
**caractérisé en ce que**
l'évidement est une fente (32, 32') qui s'étend en particulier parallèlement ou transversalement à un axe longitudinal de la tige (12), ou **en ce que** l'évidement est un perçage (29, 29') qui est disposé en particulier coaxialement ou perpendiculairement à l'axe longitudinal de la tige (12).

5. Thermocouple selon la revendication 3 ou 4,
**caractérisé en ce que**
le blindage forme un couvercle (30) ou un capuchon (20) qui referme l'évidement (24, 29, 29', 32, 32') par rapport à l'extérieur.

6. Thermocouple selon l'une au moins des revendications précédentes, **caractérisé en ce que**
le blindage (20, 30) entoure ou recouvre sensiblement complètement les faces extérieures de la pointe de mesure (14).

7. Thermocouple selon l'une au moins des revendications précédentes, **caractérisé en ce que**
l'emplacement de contact (16) est en contact thermiquement et/ou électriquement conducteur avec le blindage (20, 30).

8. Thermocouple selon l'une au moins des revendications précédentes, **caractérisé en ce que**
le matériau de blindage est métallique.

9. Thermocouple selon l'une au moins des revendications précédentes, **caractérisé en ce que**
le matériau de blindage comprend l'un des deux matériaux conducteurs ou un mélange des deux matériaux conducteurs.

10. Thermocouple selon l'une au moins des revendications précédentes, **caractérisé en ce que**
l'un au moins des matériaux conducteurs et/ou le matériau de blindage comprend du platine.

11. Thermocouple selon l'une au moins des revendications précédentes, **caractérisé en ce que**
le matériau de la tige comprend de l'oxyde d'aluminium et/ou une colle résistante aux températures élevées.

12. Procédé de fabrication d'un thermocouple, en particulier selon l'une des revendications précédentes, comportant une tige (12) et une pointe de mesure (14) agencée à une extrémité de la tige (12), dans lequel le thermocouple comprend un premier conducteur (18a) et un second conducteur (18b) qui sont fabriqués en différents matériaux conducteurs et qui sont en contact électrique l'un avec l'autre à un emplacement de contact (16) prévu dans la zone de la pointe de mesure (14), dans lequel le premier conducteur (18a) et le second conducteur (18b) sont noyés au moins localement dans un matériau de la tige (12) et en supplément ou en variante par rapport au matériau de tige, l'emplacement de contact (16) est blindé vis-à-vis de l'extérieur au moins localement par un blindage (20, 30) réalisé en un matériau de blindage, et le matériau de blindage présente un coefficient de diffusion plus faible et/ou une conductivité thermique plus élevée que le matériau de la tige,
**caractérisé en ce que**
pour réaliser l'emplacement de contact (16), à partir des portions d'extrémité des deux conducteurs (18a, 18b), on met en forme une matière moulable commune à partir de laquelle on met en forme au moins une partie du blindage (20, 30).

13. Procédé selon la revendication 12,
**caractérisé en ce que**
pour réaliser l'emplacement de contact (16) on fait fondre en particulier conjointement les deux conducteurs (18a, 18b) au moins partiellement en formant une goutte fondue, et à partir de la goutte fondue on met en forme au moins une partie du blindage (20, 30).
